(19) Europäisches Patentamt
European Patent Office
Office européen des brevets

(11) **EP 2 852 162 A1**

(12) **EUROPEAN PATENT APPLICATION**
published in accordance with Art. 153(4) EPC

(43) Date of publication:
**25.03.2015 Bulletin 2015/13**

(51) Int Cl.:
***H04N 13/04*** (2006.01)   ***G06F 3/048*** (2013.01)

(21) Application number: **13790204.5**

(22) Date of filing: **27.03.2013**

(86) International application number:
**PCT/JP2013/058976**

(87) International publication number:
**WO 2013/172099 (21.11.2013 Gazette 2013/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.05.2012   JP 2012110719**

(71) Applicant: **Sony Corporation
Tokyo 108-0075 (JP)**

(72) Inventors:
• **SHIMIZU, Akira
Tokyo 108-0075 (JP)**
• **WATANABE, Keisuke
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **IMAGE PROCESSING DEVICE, INFORMATION PROCESSING SYSTEM, IMAGE PROCESSING METHOD, AND PROGRAM**

(57)   Provided is an image processing apparatus including a parallax acquiring unit configured to acquire a parallax of each of a plurality of stereoscopic pictures in a moving picture including the plurality of stereoscopic pictures chronologically as a moving picture parallax, and a parallax generating unit configured to generate a parallax causing a position in front of all of the plurality of stereoscopic pictures corresponding to the moving picture parallax acquired in a certain period of time to be a display position of a user interface picture as a user interface parallax.

FIG. 2

EP 2 852 162 A1

**Description**

Technical Field

The present technology relates to an image processing apparatus that performs stereoscopic display Particularly, the present technology relates to an image processing apparatus, an information processing system, and an image processing method that cause a user interface picture to be stereoscopically displayed, and a program causing a computer to execute the method.

Background Art

In the past, a display device that combines a subtitle picture for displaying subtitles with a moving picture and displays a combined picture has been used (for example, see Patent Literature 1). In such a display device, in addition to a subtitle picture, a user interface (UI) picture by which a user exchanges information with a certain device is often further combined according to the user's operation.
The display device can display the picture in the moving picture, the subtitle picture, and the UI picture to be stereoscopically viewed. For example, the display device can cause a picture to be stereoscopically viewed by generating a left picture and a right picture having a parallax therebetween and performing display such that the left picture is viewed by the left eye, and the right picture is viewed by the right eye. At the time of display, the left and right pictures are alternately displayed on the display device in a time division manner, and an active shutter glasses scheme in which left and right shutters are operated by dedicated glasses in synchronization with a switching timing thereof is used.

Citation List

Patent Literature

Patent Literature 1: JP 2012-4654A

Summary of Invention

Technical Problem

However, in the related art, when a moving picture and a UI picture are stereoscopically displayed, operability of a device is likely to be lowered. For example, when a subtitle picture or a picture in a moving picture stereoscopically displayed by the display device is displayed in front of a UI picture in a superimposed manner, it is difficult for the user to view the UI picture. In this case, it is difficult for the user to operate the device while viewing the UI picture, and thus operability of the device is lowered.
The present technology was made in light of the foregoing, and it is an object of the present technology to prevent operability of a device from being lowered when a moving picture and a UI picture are stereoscopically displayed.

Solution to Problem

The present technology has been made to solve the above problems, and according to a first aspect thereof, there is provided an image processing apparatus including a parallax acquiring unit configured to acquire a parallax of each of a plurality of stereoscopic pictures in a moving picture including the plurality of stereoscopic pictures chronologically as a moving picture parallax, and a parallax generating unit configured to generate a parallax causing a position in front of all of the plurality of stereoscopic pictures corresponding to the moving picture parallax acquired in a certain period of time to be a display position of a user interface picture as a user interface parallax; an image processing method; and a program for causing a computer to execute the method.
Thus, an effect of generating a position in front of any of a plurality of stereoscopic pictures corresponding to a moving picture parallax as a user interface parallax is obtained.
According to the first aspect, the parallax acquiring unit may further acquire parallaxes of a plurality of stereoscopic subtitle pictures to be combined with the plurality of stereoscopic pictures as a subtitle parallax, and the parallax generating unit may generate a parallax causing a position in front both the plurality of stereoscopic pictures corresponding to the moving picture parallax acquired in the certain period of time and the plurality of stereoscopic subtitle pictures corresponding to the subtitle parallax to be the display position of the user interface picture as the user interface parallax.
Thus, an effect of generating a position in front of any of a plurality of stereoscopic pictures corresponding to a moving picture parallax and a plurality of stereoscopic subtitle pictures corresponding to a subtitle parallax as a user interface parallax is obtained.

According to the first aspect, the parallax generating unit may generate a parallax causing a position in front of a picture at a forefront among the plurality of stereoscopic pictures acquired in the certain period of time by a certain distance to be the display position of the user interface picture as the user interface parallax.

Thus, an effect of generating a parallax causing a position in front of a picture at a forefront among a plurality of stereoscopic pictures acquired in a certain period of time by a certain distance to be a display position of a user interface picture as a user interface parallax is obtained.

According to the first aspect, a parallax correcting unit configured to correct the moving picture parallax to have a value causing a position behind the user interface picture to be the display position when the moving picture parallax causing a position in front of the user interface picture to be a display position of the stereoscopic picture is acquired may be further included.

Thus, an effect of correcting a moving picture parallax to have a value causing a position behind a user interface picture to be a display position is obtained.

According to the first aspect, the parallax generating unit may include a maximum parallax selecting unit configured to select a parallax of a picture to be displayed at a forefront among display positions of the plurality of stereoscopic pictures and stereoscopic subtitle pictures acquired in the certain period of time at a plurality of certain periods of time as a maximum parallax, a curved line approximating unit configured to obtain a curved line approximating a trajectory of a change in the maximum parallax on a time axis, and a user interface parallax generating unit configured to generate a parallax causing a position in front of a display position according to the approximate parallax to be the display position of the user interface picture as the user interface parallax based on a change in approximate parallax on a time axis indicated by the curved line.

Thus, an effect of generating a parallax causing a position in front of a display position according to an approximate parallax at a certain time on a time axis to be a display position of a user interface picture as a user interface parallax based on a change in an approximate parallax on a time axis indicated by a curved line is obtained.

According to the first aspect, a picture combining unit configured to combine the user interface picture having a position according the user interface parallax as a display position with each of the plurality of stereoscopic pictures may further included.

Thus, an effect of combining a user interface picture having a position according to a user interface parallax as a display position with each of a plurality of stereoscopic pictures is obtained.

According to a second aspect of the present technology, there is provided an information processing system including a parallax acquiring unit configured to acquire a parallax of each of a plurality of stereoscopic pictures in a moving picture including the plurality of stereoscopic pictures chronologically as a moving picture parallax, a parallax generating unit configured to generate a parallax causing a position in front of all of the plurality of stereoscopic pictures corresponding to the moving picture parallax acquired in a certain period of time to be a display position of a user interface picture as a user interface parallax, and a display unit configured to display the plurality of stereoscopic pictures combined with the user interface picture having a position according to the user interface parallax as a display position.

Advantageous Effects of Invention

According to the present technology, an excellent effect of preventing operability of a device from being lowered when a moving picture and a UI picture are stereoscopically displayed is obtained.

Brief Description of Drawings

[FIG. 1] FIG. 1 is a block diagram illustrating an exemplary configuration of an information processing system according to a first embodiment.
[FIG. 2] FIG. 2 is a block diagram illustrating an exemplary configuration of an image processing apparatus according to the first embodiment.
[FIG. 3] FIG. 3 is a block diagram illustrating an exemplary configuration of a UI parallax generating unit according to the first embodiment.
[FIG. 4] FIG. 4 is a diagram for describing an exemplary configuration of a moving picture stream according to the first embodiment.
[FIG. 5] FIG. 5 is a diagram illustrating an exemplary configuration of a subtitle stream according to the first embodiment.
[FIG. 6] FIG. 6 is a diagram illustrating an exemplary data structure of a PES packet of a subtitle stream according to the first embodiment.

[FIG. 7] FIG. 7 is a diagram illustrating exemplary data stored in a PES packet of a subtitle stream according to the first embodiment.

[FIG. 8] FIG. 8 is a diagram illustrating an exemplary configuration of a parallax buffer according to the first embodiment.

[FIG. 9] FIG. 9 is a diagram illustrating an exemplary operation of the image processing apparatus according to the first embodiment.

[FIG. 10] FIG. 10 is a diagram for describing a parallax according to the first embodiment.

[FIG. 11] FIG. 11 is a diagram illustrating an exemplary stereoscopic display method according to the first embodiment.

[FIG. 12] FIG. 12 is a diagram illustrating an exemplary change in a UI parallax according to the first embodiment.

[FIG. 13] FIG. 13 is a diagram illustrating an exemplary UI picture stereoscopically displayed at the forefront according to the first embodiment.

[FIG. 14] FIG. 14 is a block diagram illustrating an exemplary configuration of an image processing apparatus according to a second embodiment.

[FIG. 15] FIG. 15 is a diagram illustrating an exemplary change in a UI parallax according to the second embodiment.

[FIG. 16] FIG. 16 is a block diagram illustrating an exemplary configuration of a UI parallax generating unit according to a third embodiment.

[FIG. 17] FIG. 17 is a diagram illustrating an exemplary change in a UI parallax according to the third embodiment.

Description of Embodiments

Hereinafter, modes (hereinafter referred to as "embodiments") for carrying out the present technology will be described. The description will proceed in the following order.

1. First embodiment (example in which UI picture is stereoscopically displayed in forefront)
2. Second embodiment (example in which display position of UI picture is corrected to the front)
3. Third embodiment (example in which display position of UI picture is changed smoothly)

<1. First embodiment>

[Exemplary configuration of information processing system]

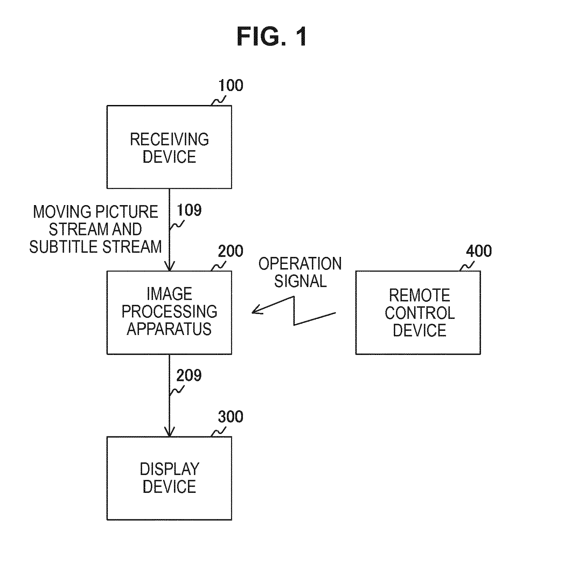

FIG. 1 is an overall diagram illustrating an example of an information processing system according to a first embodiment. The information processing system includes a receiving device 100, an image processing apparatus 200, a display device 300, and a remote control device 400.

The receiving device 100 receives a moving picture stream and a subtitle stream. The moving picture stream is data of a moving picture delivered from a broadcasting station or the like in conformity with a certain broadcasting standard. As a broadcasting standard, for example, a digital video broadcast (DVB) is used. The moving picture includes a plurality of pictures that are chronologically displayed. Further, the moving picture is a moving picture created to be stereoscopically displayed, and each of the pictures in the moving picture is referred to as a "main stereoscopic picture." Each of the main stereoscopic pictures includes a left main picture viewed by the viewer's left eye and a right main picture viewed by the right eye.

The moving picture is coded according to a certain coding scheme as necessary. As a coding scheme, for example, a Moving Picture Experts Group (MPEG) 2-transport stream (TS) standard is used. In the MPEG2-TS, a coded picture is stored in a packetized elementary stream (PES) packet, and each picture is associated with a presentation time stamp (PTS) and a parallax. The PTS is reproduction output time management information, and indicates when a picture given a time stamp is reproduced and output. A parallax is for stereoscopic display of a main picture. Specifically, deviation between subtitle data and left and right main pictures in a horizontal direction corresponds to a parallax. Hereinafter, a parallax of a moving picture is referred to as "moving picture parallax."

Further, the receiving device 100 may receive analog broadcasting and perform analog to digital (A/D) conversion on a broadcast wave to generate a moving picture stream.

The subtitle stream received by the receiving device 100 is data related to subtitles delivered from a broadcasting station or the like. Specifically, the subtitle stream includes subtitle data and a parallax and a PTS associated with the subtitle data. The subtitle data includes, for example, a picture (hereinafter referred to as a "subtitle picture") indicating subtitles and a character string indicating subtitles. The parallax in the subtitle stream functions to cause subtitles to be stereoscopically displayed. Specifically, when a left subtitle picture and a right subtitle picture are generated from subtitle data, deviation between pictures in the horizontal direction corresponds to a parallax. A picture including a left subtitle picture and a right subtitle picture is hereinafter referred to as a "stereoscopic subtitle picture." Further, a parallax of subtitles is hereinafter referred to as "subtitle parallax." The subtitle data and the subtitle parallax are coded and stored in a PES packet as necessary. The PTS in the subtitle stream is time management information indicating when the subtitles are reproduced and output, and is used to reproduce the subtitles in synchronization with the moving picture.

The subtitle stream is multiplexed into the moving picture stream and delivered. The receiving device 100 demultiplexes the subtitle stream from the moving picture stream, and supplies the demultiplexed moving picture stream and the subtitle stream to the image processing apparatus 200. Instead of the receiving device 100, the image processing apparatus 200 may demultiplex the subtitle stream.

The image processing apparatus 200 combines the subtitle picture or the user interface (hereinafter referred to as a "UI") picture with the moving picture based on the moving picture stream and the subtitle stream. The UI picture is a picture by which the user exchanges information with a certain device (for example, the display device 300). The image processing apparatus 200 acquires the subtitle parallax and the subtitle data from the subtitle stream, and generates a stereoscopic subtitle picture to be stereoscopically displayed at a position according to the subtitle parallax from the subtitle data. The image processing apparatus 200 generates the UI picture and the UI parallax according to control of the remote control device 400. The UI parallax functions to cause the UI picture to be stereoscopically displayed. The image processing apparatus 200 generates a stereoscopic UI picture to be stereoscopically displayed at a position according to the UI parallax based on the UI picture. The image processing apparatus 200 combines the stereoscopic UI picture and the stereoscopic subtitle picture with the moving picture. Then, the image processing apparatus 200 supplies the moving picture combined with the stereoscopic subtitle picture and the stereoscopic UI picture to the display device 300.

The image processing apparatus 200 is configured to acquire a moving picture stream and a subtitle stream delivered from a broadcasting station or the like from the receiving device 100, but the image processing apparatus 200 may acquire a moving picture stream and a subtitle stream recorded in a moving picture recording device.

The display device 300 stereoscopically displays the moving picture combined with the stereoscopic subtitle picture or the stereoscopic UI picture. As a stereoscopic display scheme, an active shutter glasses scheme, a polarization display scheme, a parallax barrier scheme, or the like is used. The display device 300 is an example of a display unit set forth in the appended claims.

The remote control device 400 generates an operation signal for controlling a device such as the display device 300 according to the user's operation. The remote control device 400 transmits the operation signal to the image processing apparatus 200 using an infrared ray or the like.

The information processing system is configured to cause both a moving picture and subtitles to be stereoscopically displayed, but only a moving picture may be stereoscopically displayed. In this case, a parallax of subtitles is not delivered. Alternatively, a parallax having a value (for example, "0") indicating that there is no deviation between a left picture and a right picture is delivered as a subtitle parallax.

[Exemplary configuration of image processing apparatus]

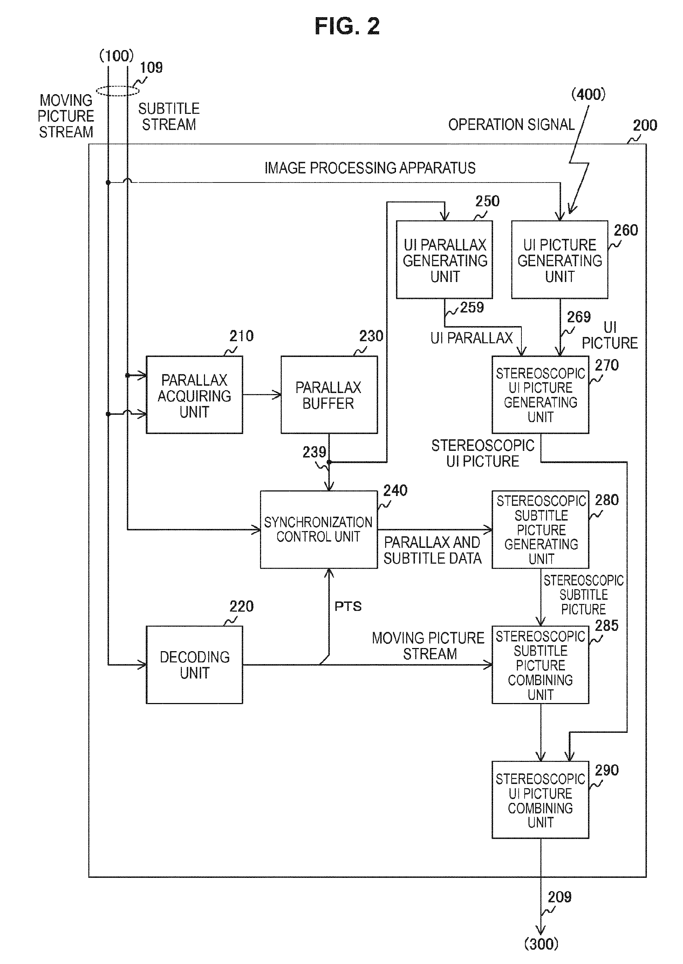

FIG. 2 is a block diagram illustrating an exemplary configuration of the image processing apparatus 200 according to the first embodiment. The image processing apparatus 200 includes a parallax acquiring unit 210, a decoding unit 220, a parallax buffer 230, a synchronization control unit 240, a UI parallax generating unit 250, a UI picture generating unit 260, a stereoscopic UI picture generating unit 270, and a stereoscopic subtitle picture generating unit 280. The image processing apparatus 200 further includes a stereoscopic subtitle picture combining unit 285 and a stereoscopic UI picture combining unit 290.

The parallax acquiring unit 210 acquires a parallax and the PTS from the moving picture stream and the subtitle stream. Specifically, the parallax acquiring unit 210 acquires the PTS from the header of the PES packet in the moving picture stream and the subtitle stream, and acquires the parallaxes (the moving picture parallax and the subtitle parallax) from the payload of the PES packet.

For example, when a parallax of a range from the front side to the back side is divided into 256 steps, a value of "-128" to "127" is acquired as the parallax. The acquired parallax is used as an amount for causing the left picture and the right picture to deviate in the horizontal direction based on the right picture. When the parallax is negative ("-128" to "-1"), a picture (a main picture or a subtitle picture) is stereoscopically displayed in front of the reference position in the depth direction. Meanwhile, when the parallax is positive ("1" to "127"), a picture is stereoscopically displayed behind the reference position. When the parallax is "0," a picture is displayed at the reference position but not stereoscopically viewed. The parallax may be an amount for causing the left picture and the right picture to deviate in the horizontal direction based on the left picture. In this case, when the parallax is negative, the picture is stereoscopically displayed behind the reference position, whereas when the parallax is positive, the picture is stereoscopically displayed in front of the reference position. Further, the parallax range may be divided in a number of steps other than 256. For example, both the front side and the back side may be divided into 127 steps, and a range from the front side to the back side including the reference position may be divided into 255 steps.

The parallax acquiring unit 210 causes the PTS and the parallax acquired from the same PES packet to be held in the parallax buffer 230 in association with each other. The parallax buffer 230 holds the parallax in association with the PTS.

When a moving picture stream is a coded stream, the decoding unit 220 decodes the moving picture stream. The decoding unit 220 decodes the moving picture stream according to a decoding scheme corresponding to the coding scheme of the moving picture stream. The decoding unit 220 supplies the decoded moving picture stream to the stereoscopic subtitle picture combining unit 285. The decoding unit 220 acquires the PTS from the subtitle stream, and supplies the PTS to the synchronization control unit 240.

The synchronization control unit 240 supplies the subtitle data and the parallax to the stereoscopic subtitle picture generating unit 280 in synchronization with a display timing of the moving picture. Specifically, the synchronization control unit 240 receives the PTS acquired by the decoding unit 220, and determines whether or not the received PTS has the same value as the PTS held in the parallax buffer 230. When the received PTS has the same value as the PTS held in the parallax buffer 230, the synchronization control unit 240 reads the subtitle parallax corresponding to the PTS from the parallax buffer 230. The synchronization control unit 240 supplies the read subtitle parallax and the subtitle data corresponding to the subtitle parallax to the stereoscopic subtitle picture generating unit 280.

The UI parallax generating unit 250 generates parallax that causes a position in front of pictures corresponding to the moving picture parallax and the subtitle parallax acquired in a certain period of time to be a display position of the UI picture as the UI parallax. Specifically, the UI parallax generating unit 250 adds a certain correction amount $\alpha$ ($\alpha$ is a positive real number) to the largest parallax among the moving picture parallax and the subtitle parallax acquired in a certain period of time. The UI parallax generating unit 250 supplies a value obtained by the addition to the stereoscopic UI picture generating unit 270 as the UI parallax via a signal line 259. The UI parallax generating unit 250 is an example of a parallax generating unit set forth in the appended claims.

The UI picture generating unit 260 generates the UI picture. For example, a picture for performing a network setting, a recording setting, correction of a brightness value or a gamma value of a screen, display of a program guide, or the like is generated as the UI picture. Specifically, when the program guide or the like is displayed, the UI picture generating unit 260 acquires the program guide from the moving picture stream, and generates a picture indicating the program guide according to an operation signal. The UI picture generating unit 260 supplies the generated UI picture to the stereoscopic UI picture generating unit 270.

The stereoscopic UI picture generating unit 270 generates the stereoscopic UI picture to be stereoscopically displayed at the display position according to the UI parallax. The stereoscopic UI picture generating unit 270 generates a picture deviated from the UI picture in the screen in the left direction when viewed from the viewer and a picture deviated from the UI picture in the right direction according to the UI parallax, and regards one of the pictures as a left UI picture and the other as a right UI picture. The stereoscopic UI picture generating unit 270 supplies the stereoscopic UI picture including the generated right UI picture and left UI picture to the stereoscopic UI picture combining unit 290.

The stereoscopic subtitle picture generating unit 280 generates the stereoscopic subtitle picture to be stereoscopically displayed at the display position according to the subtitle parallax. The stereoscopic subtitle picture generating unit 280 generates a picture deviated from the subtitle picture in the screen in the left direction when viewed by the viewer and a picture deviated from the subtitle picture in the right direction according to the subtitle parallax, and regards one of the pictures as a left subtitle picture and the other as a right subtitle picture. Here, when a stereoscopic subtitle picture is generated based on subtitle data including a character string, the stereoscopic subtitle picture generating unit 280 generates a picture obtained by rendering the character string as a subtitle picture, and generates the right subtitle picture and the left subtitle picture by shifting the subtitle picture rightward and leftward. The stereoscopic subtitle picture generating unit 280 supplies the stereoscopic subtitle picture including the generated right subtitle picture and left subtitle picture to the stereoscopic subtitle picture combining unit 285.

The stereoscopic subtitle picture combining unit 285 combines the stereoscopic subtitle picture with the moving picture. The stereoscopic subtitle picture combining unit 285 supplies the moving picture stream combined with the stereoscopic subtitle picture to the stereoscopic UI picture combining unit 290.

The stereoscopic UI picture combining unit 290 combines the stereoscopic UI picture with the moving picture. The stereoscopic UI picture combining unit 290 further combines the stereoscopic UI picture with the moving picture stream combined with the stereoscopic subtitle picture, and supplies the resultant picture to the display device 300.

[Exemplary configuration of UI parallax generating unit]

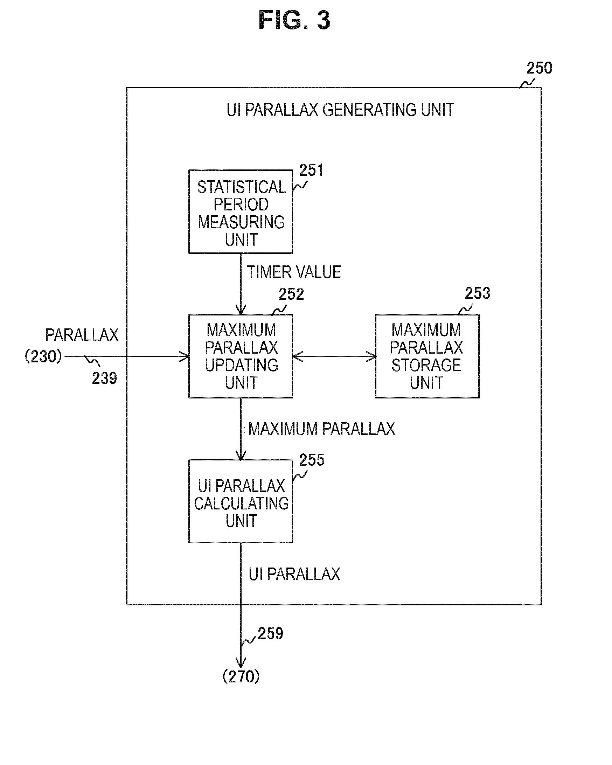

FIG. 3 is a block diagram illustrating an exemplary configuration of the UI parallax generating unit 250 according to the first embodiment. The UI parallax generating unit 250 includes a statistical period measuring unit 251, a maximum parallax updating unit 252, a maximum parallax storage unit 253, and a UI parallax calculating unit 255.

The statistical period measuring unit 251 measures a time in a certain period (hereinafter referred to as a "statistical period"). For example, the statistical period measuring unit 251 includes a counter that repeatedly counts a value in a range from an initial value (for example, "0") to a maximum value (for example, "100") each time a certain period of time (for example, 1 milliseconds) elapses, and outputs the counter value to the maximum parallax updating unit 252 as a timer value.

The maximum parallax updating unit 252 obtains the maximum parallax among the moving picture parallax and the subtitle parallax acquired in the statistical period. Specifically, when the timer value is the initial value, the maximum parallax updating unit 252 causes a parallax having a value of "0" to be stored in the maximum parallax storage unit 253 as the maximum parallax. The maximum parallax updating unit 252 refers to the parallax buffer 230 in the statistical period until the timer value becomes the maximum value, and compares a parallax with the maximum parallax in the maximum parallax storage unit 253 each time the parallax is acquired. When the acquired parallax is larger than the maximum parallax, the maximum parallax updating unit 252 updates the maximum parallax storage unit 253 based on the parallax. Then, when the timer value is the maximum value, the maximum parallax updating unit 252 reads the maximum parallax at that point in time from the maximum parallax storage unit 253, and supplies the read maximum parallax to the UI parallax calculating unit 255. The maximum parallax updating unit 252 repeatedly performs the process in each statistical period.

Each time the maximum parallax is supplied, the UI parallax calculating unit 255 generates a parallax larger than the maximum parallax as the UI parallax. Specifically, when the maximum parallax is supplied, the UI parallax calculating unit 255 adds the certain correction amount $\alpha$ to the maximum parallax, and regards the value as the UI parallax. The UI parallax calculating unit 255 supplies the generated UI parallax to the stereoscopic UI picture combining unit 270. Here, since the maximum parallax is not obtained in the first statistical period, the UI parallax calculating unit 255 uses, for example, a certain setting value (for example, "127") as the UI parallax. Alternatively, the UI parallax calculating unit 255 stores a UI parallax lastly set in a previous moving picture stream, and outputs the UI parallax in the first statistical period in a current moving picture stream.

The UI parallax calculating unit 255 generates the UI parallax by adding the correction amount $\alpha$ to the maximum parallax, but as long as a parallax larger than the maximum parallax is generated, the UI parallax may be generated by any other method. For example, the UI parallax calculating unit 255 may multiply the maximum parallax by a certain correction amount larger than "1" and use the value as the UI parallax.

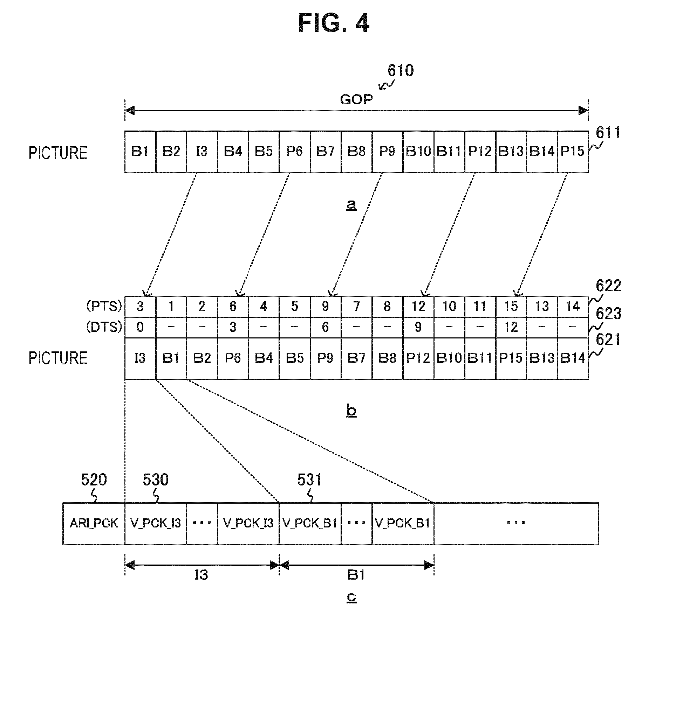

FIG. 4 is a diagram illustrating an exemplary configuration of the moving picture stream according to the first embodiment. The moving picture stream is coded in units called groups of pictures (GOPs), and decoded in the decoding unit 220 in units of GOPs. A GOP is a set of pictures including at least one intra (I) picture used as a reference in coding. a in FIG. 4 illustrates an example in which a GOP 610 is configured with a total of 15 pictures 611 including one I picture, 4 predirective (P) pictures, and 10 bidirectionally predictive (B) pictures. Here, an I picture is a picture used as a reference in coding. A P picture is a picture to be coded using a difference with an I picture or a P picture that precedes it chronologically. A B picture is a picture to be coded using a difference with I pictures or P pictures chronologically before and after it

The 15 pictures in the GOP are coded such that some pictures are switched in an order as illustrated in b in FIG. 4. This is done based on a feature of a coding scheme in an MPEG standard to avoid waiting for a chronologically subsequent picture at the time of decoding. For example, in order to decode a B picture (B5), it is necessary to refer to an I picture (I3) and a P picture (P6). To this end, switching has to be performed as illustrated in b in FIG. 4 so that picture data (I3 and P6) is completed when the B picture (B5) is decoded. Further, in order to define an order relation of a picture 521, a pack header of V_PCK is given time stamps such as a PTS 622 and a decoding time stamp (DTS) 623. As described above, the PTS 622 is reproduction and output time management information, and indicates when a unit picture given a time stamp is reproduced and output. Meanwhile, the DTS 623 is decoding time management information, and indicates when a unit picture given a time stamp is decoded.

Coded pictures are placed in one or more packs as illustrated in c in FIG. 4. In a pack, a plurality of PES packets are connected, and a pack header is added. For example, the I picture (I3) is held as V_PCK_I3 (530), and the B picture (B1) is held as V_PCK_B1 (531). In a set of V_PCKs 530 configuring one GOP 610, ARI_PCK 520 including supplementary data is multiplexed together with A_PCK 520. A group of multiplexed packs configures a moving picture stream.

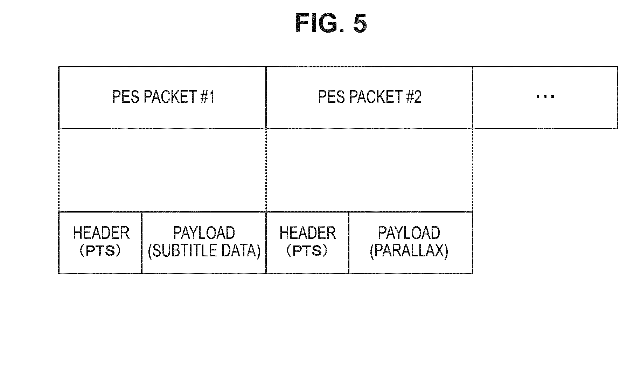

FIG. 5 is a diagram illustrating an exemplary configuration of a subtitle stream according to an embodiment. A subtitle stream is configured with a group of PES packets independent of a moving picture stream. A PES packet is generated by dividing data (for example, subtitle data or a parallax) configuring a subtitle stream as necessary, adding a header, and packetizing resultant data. Each of PES packets in a subtitle stream includes a packet header and a payload. For example, a PTS is described in the packet header. Subtitle data to be displayed at a timing indicated by the PTS and a parallax of the subtitle data are stored in the payload. Further, a horizontal coordinate and a vertical coordinate of a region on which the subtitle data is displayed and a configuration (for example, a range of the horizontal coordinate and the vertical coordinate) of a main picture combined with the subtitle data are stored in the payload.

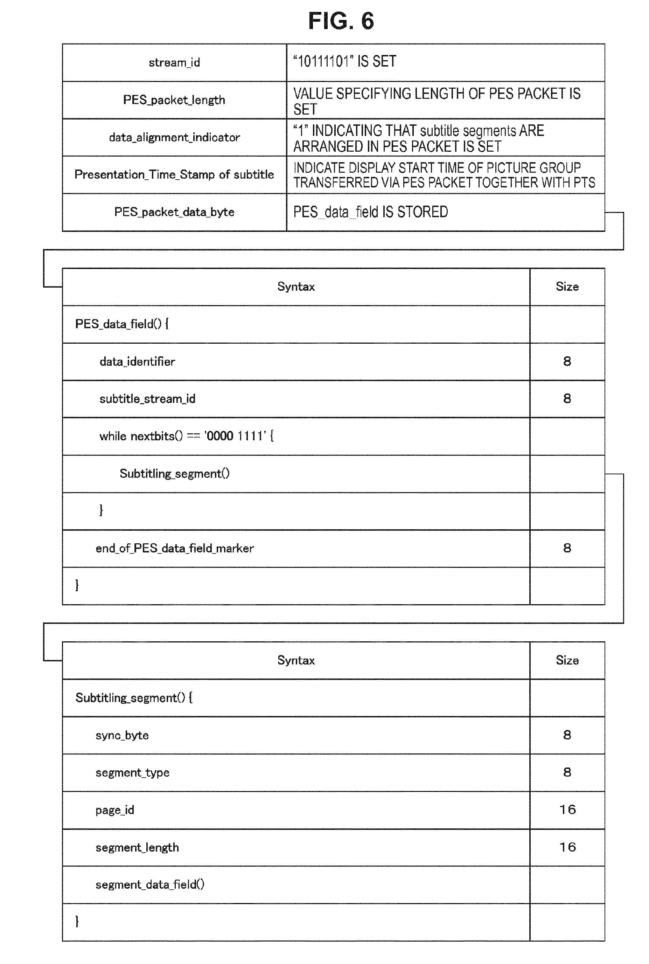

FIG. 6 is a diagram illustrating an exemplary data structure of a PES packet in a subtitle stream according to an embodiment. For example, data according to the DVB standard is described in a PES packet. In the DVB standard, identification information (Stream_id) of a subtitle stream, a PES packet length (PES_packet_length), and a PTS of subtitle data, and the like are described in a header of a PES packet. Further, an indicator (PES_alignment_indicator) indicating that subtitle data is arranged in a PES packet is described. A payload (data in "PES_data_field") of a PES packet is stored in a field of "PES_packet_data_byte." A payload is provided with a field of "subtitle_segment ()" In the DVB standard, each piece of data of components of a subtitle stream is referred to as a "segment." The details of each "segment" are described in a field of "subtitle_segment ()" in FIG. 6. Specifically, information (sync_byte) specifying a start position of "segment" is described in "subtitle_segment ()." In this field, a (segment_type) and a length (segment_length) of "segment" type and identification information (page_id) of a main picture used by "segment" are described. Further, data of "segment" is stored in "segment-data-field." A type (segment_type) of "segment" is, for example, subtitle data, a subtitle parallax, configuration information (for example, a horizontal coordinate and a vertical coordinate of a display region) of subtitle data, or a configuration (for example, a range of a horizontal coordinate and a vertical coordinate) of a main picture combined with subtitle data.

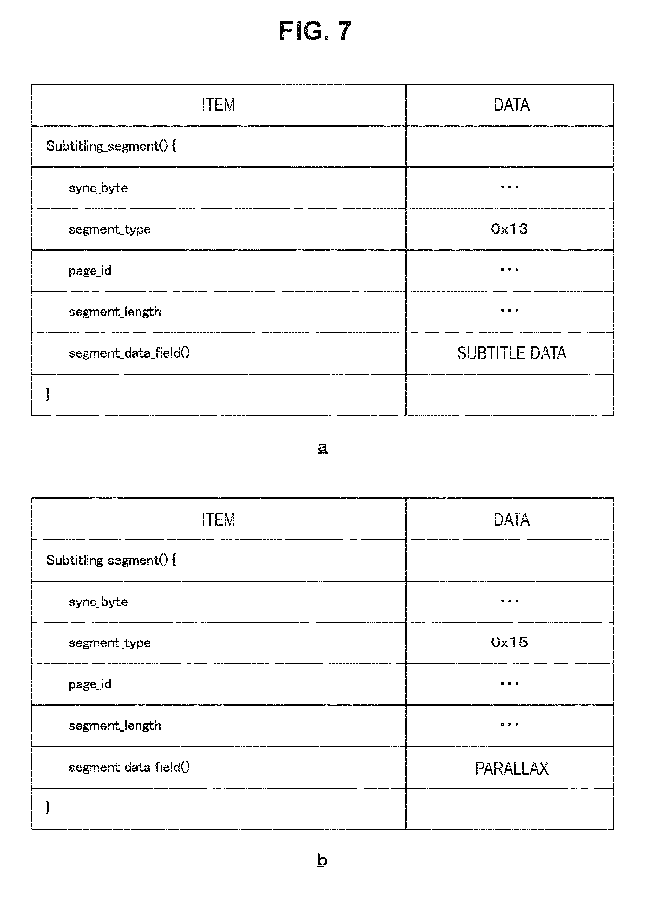

FIG. 7 is a diagram illustrating exemplary data stored in a PES packet according to an embodiment. As described above, "subtitle_segment ()" in a payload of a PES packet includes a region called "segment_type" or "segment_data_field ()" Subtitle data or a subtitle parallax is stored in "segment_data_field ()." a in FIG. 7 illustrates an example in which subtitle data is stored in "segment_data_field ()" as "segment." In this case, "0x13" indicating that "segment" is subtitle data is stored in the field of "segment_type." Further, b in FIG. 7 illustrates an example in which a parallax is stored in "segment_data_field ()" as "segment." In this case, "0x15" indicating that "segment" is a subtitle parallax is stored in the field of "segment_type."

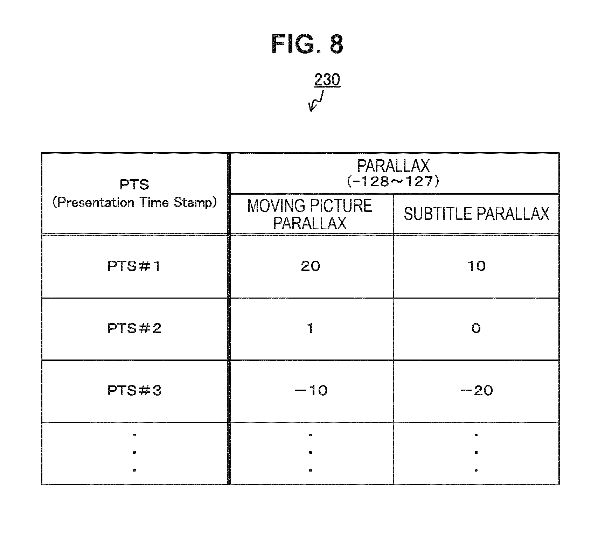

FIG. 8 is a diagram illustrating an exemplary configuration of the parallax buffer 230. The parallax buffer 230 holds a parallax in association with a PTS. Specifically, parallaxes (a moving picture parallax or a subtitle parallax) acquired from a PES packet given a PTS are held in the parallax buffer 230 in association with the PTS. Moving picture parallax and subtitle parallax that are common in a PTS are held in association with the PTS. For example, when a subtitle parallax of "10" is associated with a "PTS#1," the subtitle parallax of "10" is read at a timing of the "PTS#1." Further, a subtitle picture is stereoscopically displayed at a position according to the subtitle parallax "10."

[Exemplary operation of image processing apparatus]

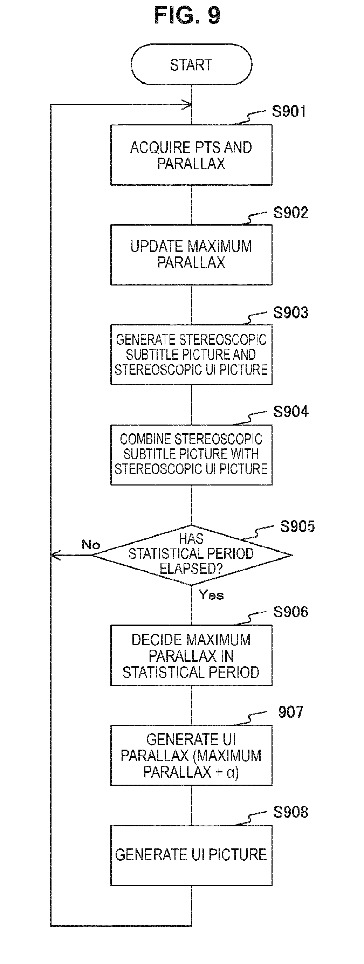

FIG. 9 is a diagram illustrating an exemplary operation of the image processing apparatus 200 according to an embodiment. For example, this operation starts when a moving picture stream and a subtitle stream are input to the image processing apparatus 200.

In the image processing apparatus 200, the parallax acquiring unit 210 acquires a PTS and parallaxes (a moving picture parallax and a subtitle parallax) from the moving picture stream and the subtitle stream, and causes the PTS and the parallaxes to be held in the parallax buffer 230 (step S901). The UI parallax generating unit 250 updates the maximum parallax based on the acquired parallax (step S902). The stereoscopic subtitle picture generating unit 280 generates a sub stereoscopic picture based on subtitle data and a subtitle parallax. The stereoscopic UI picture generating unit 270 generates the stereoscopic UI picture based on a UI picture and a UI parallax (step S903). The stereoscopic subtitle picture combining unit 285 combines a stereoscopic subtitle picture with the moving picture stream, and the stereoscopic UI picture combining unit 290 combines a stereoscopic UI picture with the moving picture stream (step S904).

The UI parallax generating unit 250 determines whether or not a statistical period has elapsed (step S905). When the statistical period has elapsed (YES in step S905), the UI parallax generating unit 250 decides the maximum parallax at that point in time as the maximum parallax in the elapsed statistical period (step S906). Then, the UI parallax generating unit 250 generates the maximum parallax + the correction amount α as the UI parallax (step S907). Further, the UI picture generating unit 260 generates a UI picture according to an operation signal (step S908). When the statistical period has not elapsed (NO in step S905) or after step S908, the image processing apparatus 200 returns to step S901.

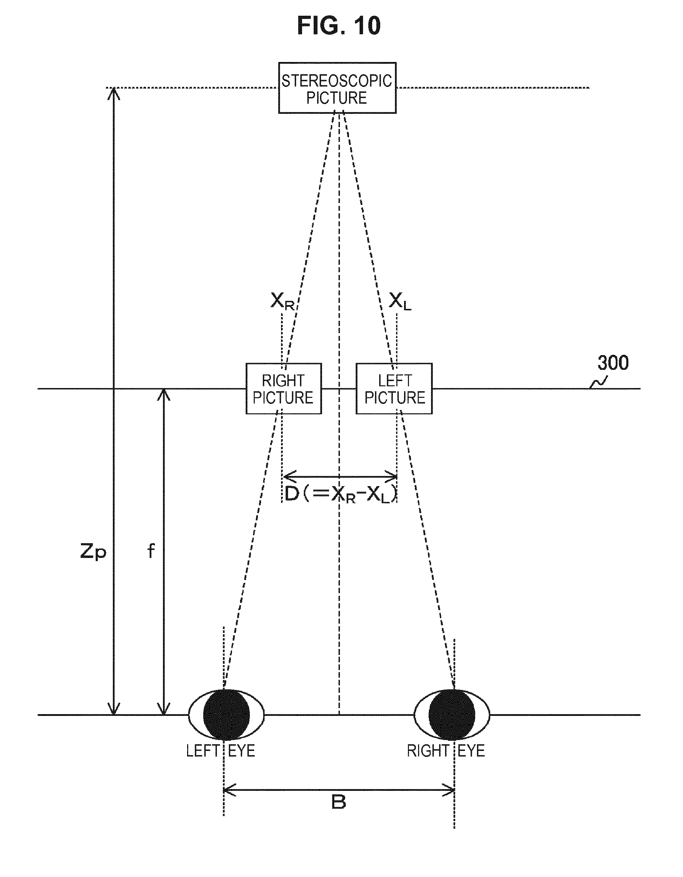

FIG. 10 is a diagram for describing a parallax according to an embodiment. A reference horizontal coordinate (for example, a horizontal coordinate of the center) of a right picture to be displayed on a display plane of the display device 300 is assumed to be $X_R$, and a reference horizontal coordinate of a left picture is assumed to be $X_L$. A value of a horizontal coordinate decreases as it is closer to the left when viewed by the viewer. In this case, for example, a value obtained by subtracting $X_L$ from $X_R$ is used as a parallax D.

Here, a distance between the left eye and the right eye is assumed to be a base distance B, a distance from the viewer to the display device 300 is assumed to be f, and a display position of a stereoscopic picture to be stereoscopically viewed in the depth direction is assumed to be Zp. At this time, since a triangle formed by the right eye, the left eye, and the center of the stereoscopic picture is similar to a triangle formed by $X_R$, $X_L$, and the center of the stereoscopic picture, the following Formula 1 holds.

$$D{:}f = B{:}Zp \quad \text{Formula 1}$$

Through Formula 1, the parallaxes (a moving picture parallax and a subtitle parallax) D for displaying a display at Zp are obtained, and delivered through the moving picture stream and the subtitle stream.

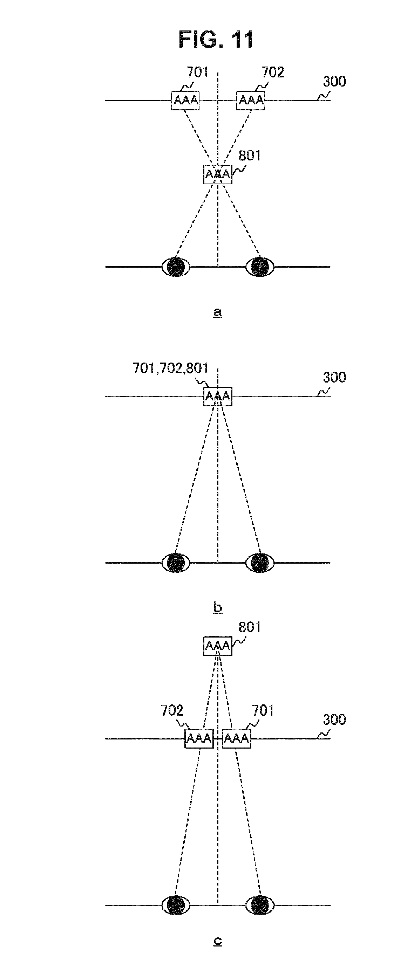

FIG. 11 is a diagram illustrating an exemplary stereoscopic display method according to an embodiment. a in FIG. 11 is a diagram illustrating an exemplary display method of displaying a picture (a main picture or a subtitle picture) at the front side. In the horizontal direction, coordinates of a right picture 701 are assumed to be at the left when viewed by the viewer, and coordinates of a left picture 702 are assumed to be at the right when viewed by the viewer. In this case, when the display device 300 displays the pictures so that the left picture 702 is viewed by the viewer's left eye, and the right picture 701 is viewed by the right eye, the viewer can view a picture 801 being displayed at the front side.

b in FIG. 11 is a diagram illustrating an exemplary display method of displaying a picture at a reference position. The horizontal coordinates of the right character image 701 and the left picture 702 are assumed not to change. In this case, when the display device 300 displays the pictures so that the left picture 702 is viewed by the viewer's left eye, and the right picture 701 is viewed by the right eye, the viewer can view the picture 801 being displayed on the display plane (the reference position) of the display device 300. At this time, the picture 801 is not stereoscopically viewed.

c in FIG. 11 is a diagram illustrating an exemplary display method of displaying a picture at the back side. In the horizontal direction, coordinates of a right picture 701 are assumed to be at the right when viewed by the viewer, and coordinates of a left picture 702 are assumed to be at the left when viewed by the viewer. In this case, when the display device 300 displays the pictures so that the left picture 702 is viewed by the viewer's left eye, and the right picture 701 is viewed by the right eye, the viewer can view the picture 801 being stereoscopically displayed at the back side.

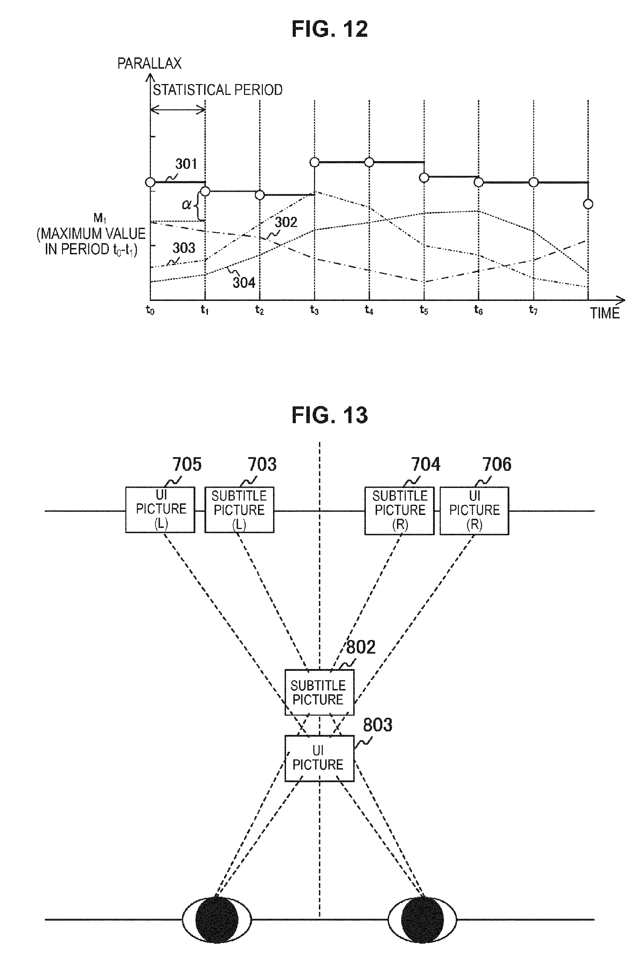

FIG. 12 is a diagram illustrating an exemplary change in the UI parallax according to the first embodiment. In FIG. 12, a horizontal axis denotes time, and a vertical axis denotes a parallax at a time on the time axis. A solid line indicates a change in a UI parallax 301. A white circle indicates an updated UI parallax at a time at which the UI parallax is updated. Trajectories of a line of alternating long and short dashes and a line of alternating long dashes and pairs of short dashes indicate changes in subtitle parallaxes 302 and 303. Further, a trajectory of a dotted line indicates a change in a moving picture parallax 304.

Each time a statistical period elapses, a value obtained by adding the correction amount $\alpha$ to the maximum parallax among the moving picture parallax 304 and the subtitle parallaxes 302 and 303 acquired in the statistical period is set as a UI parallax in a next statistical period. For example, when the maximum parallax in a statistical period from a time $t_0$ to a time $t_1$ is $M_1$, $M_1+\alpha$ is set as a UI parallax in a next statistical period from the time $t_1$ to a time $t_2$. As a result, the UI picture has the maximum parallax, and the UI picture is displayed at the forefront.

FIG. 13 is a diagram illustrating an exemplary UI picture stereoscopically displayed at the forefront according to the first embodiment. A parallax larger than the maximum parallax among the moving picture parallax and the subtitle parallax in the statistical period is set as the UI parallax. For example, when the maximum parallax in a certain statistical period is a parallax between a left subtitle picture 703 and a right subtitle picture 704, a parallax larger than the parallax is set as a parallax between a left UI picture 705 and a right UI picture 706 in a next statistical period. As a result, a UI picture 803 formed by the left UI picture 705 and the right UI picture 706 is stereoscopically displayed at a display position in front of a display position of a subtitle picture 802 according to the parallax between the left subtitle picture 703 and the right subtitle picture 704.

As described above, according to the first embodiment of the present technology, the image processing apparatus 200 uses a parallax larger than all moving picture parallaxes acquired in the statistical period as the UI parallax, and thus the UI picture can be stereoscopically displayed at the forefront in the next statistical period. Accordingly, the user can easily view the UI picture, and thus operability of the device based on the UI picture is improved.

<2. Second embodiment >

[Exemplary configuration of image processing apparatus]

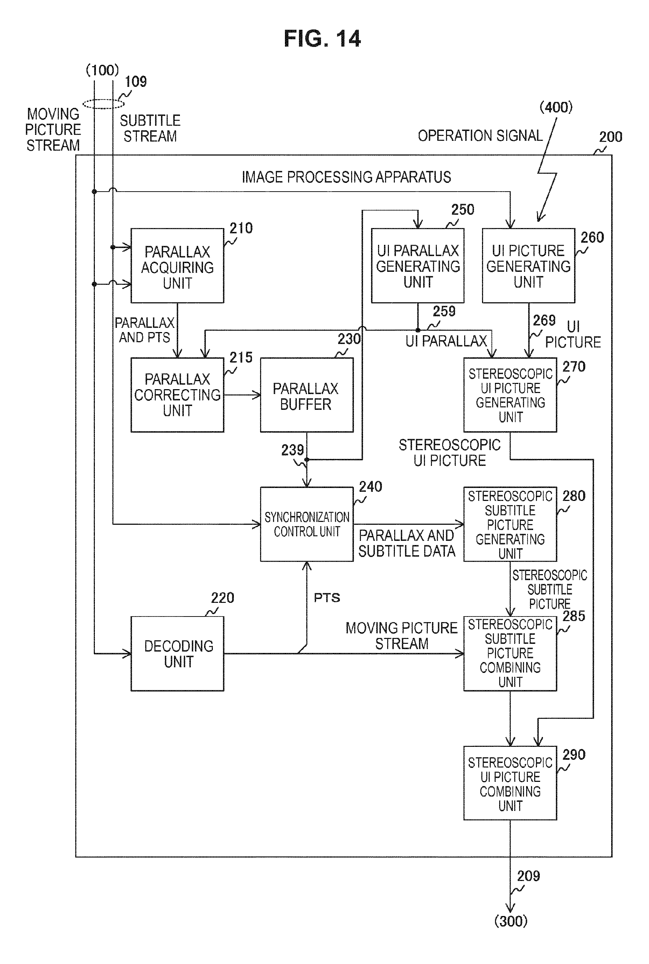

FIG. 14 is a block diagram illustrating an exemplary configuration of an image processing apparatus 200 according to a second embodiment. In the first embodiment, a UI parallax in a certain statistical period is generated based on the maximum parallax in a previous statistical period. However, when a moving picture parallax or a subtitle parallax abruptly changes in a statistical period following the statistical period in which the maximum parallax is obtained, a parallax larger than the UI parallax generated based on the maximum parallax is likely to be set. The image processing apparatus 200 of the second embodiment differs from that of the first embodiment in that a moving picture parallax and a subtitle parallax are corrected not to exceed the generated UI parallax. Specifically, the image processing apparatus 200 of the second embodiment differs from that of the first embodiment in that a parallax correcting unit 215 is further provided.

The UI parallax generating unit 250 according to the second embodiment further supplies the generated UI parallax to the parallax correcting unit 215 as well as the stereoscopic UI picture generating unit 270.

The parallax correcting unit 215 corrects the moving picture parallax and the subtitle parallax to be less than the UI parallax. Specifically, each time the parallax (the moving picture parallax and the subtitle parallax) is acquired, the parallax correcting unit 215 compares the parallax with the UI parallax. When the acquired parallax is greater than or equal to the UI parallax, the parallax correcting unit 215 corrects the parallax to be less than the UI parallax (for example, a value of UI parallax - 1). The parallax correcting unit 215 causes the corrected parallax and the PTS to be held in the parallax buffer 230.

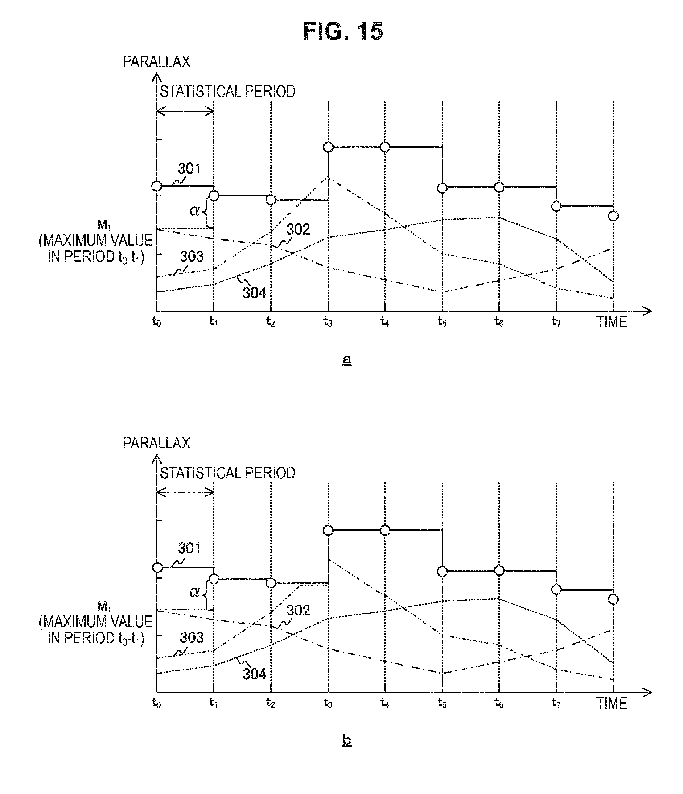

FIG. 15 is a diagram illustrating an exemplary change in the UI parallax according to the second embodiment. In FIG. 15, a horizontal axis denotes time, and a vertical axis denotes a parallax at a time on the time axis. In FIG. 15, a solid line indicates a change in the UI parallax 301. A white circle indicates an updated UI parallax at a time at which the UI parallax is updated. Trajectories of a line of alternating long and short dashes and a line of alternating long dashes and pairs of short dashes indicate changes in the subtitle parallaxes 302 and 303. Further, a trajectory of a dotted line indicates a change in the moving picture parallax 304.

a in FIG. 15 is a diagram illustrating a trajectory of a parallax when a parallax is not corrected. For example, a value obtained by adding the correction amount $\alpha$ to the maximum parallax $M_2$ in a period of time from a time $t_1$ to a time $t_2$ is assumed to be set as the UI parallax in a period of time from a time $t_3$ to a time $t_4$. When the subtitle parallax 303 abruptly changes to be larger than the UI parallax in a period of time from the time $t_2$ to the time $t_3$, the moving picture is stereoscopically displayed in front of the UI picture.

b in FIG. 15 is a diagram illustrating a trajectory of a parallax when a parallax is not corrected. When the subtitle parallax 303 greater than or equal to the UI parallax is acquired in the period of time from the time $t_2$ to the time $t_3$, the parallax correcting unit 215 corrects the moving picture parallax 303 to have a value (for example, UI parallax - 1) less than the UI parallax. As a result, the moving picture parallax and the subtitle parallax larger than the UI parallax are not set in the respective periods of time. Thus, even when the moving picture parallax or the subtitle parallax abruptly changes, the UI picture is consistently stereoscopically displayed at the forefront.

As described above, according to the second embodiment of the present technology, the image processing apparatus 200 corrects the moving picture parallax and the subtitle parallax to have a value less than the UI parallax, and thus even when the moving picture parallax or the subtitle parallax abruptly changes, the UI picture can be consistently stereoscopically displayed at the forefront. Accordingly, operability is further improved.


<3. Third embodiment >

[Exemplary configuration of UI parallax generating unit]

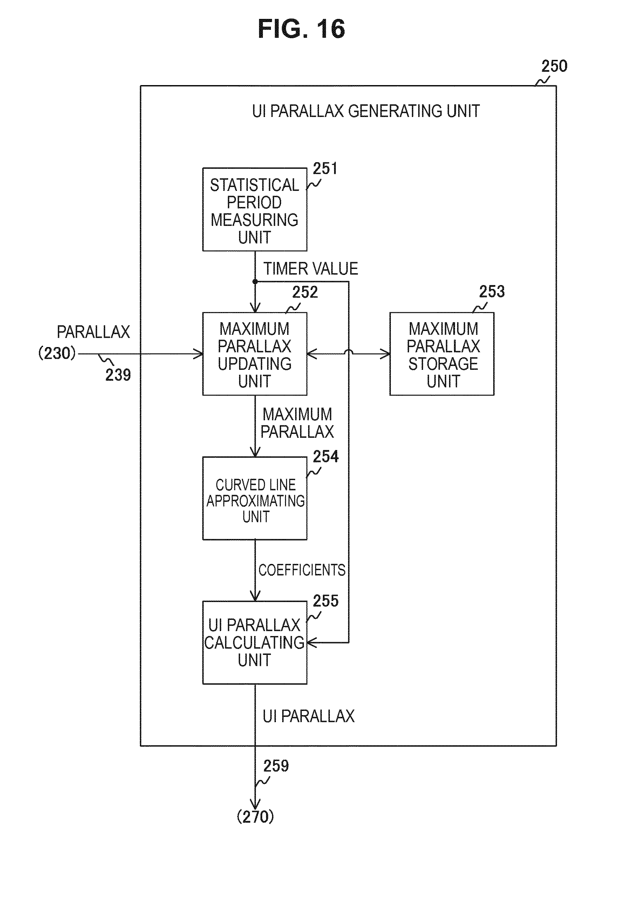

FIG. 16 is a block diagram illustrating an exemplary configuration of a UI parallax generating unit 250 according to a third embodiment. While the UI parallax generating unit 250 changes the display position of the UI picture stepwise in the first embodiment, the viewer can view the UI picture more comfortably when a display position is changed smoothly. The UI parallax generating unit 250 according to the third embodiment differs from that of the first embodiment in that the display position of the UI picture is changed smoothly. Specifically, the UI parallax generating unit 250 according to the third embodiment differs from that of the first embodiment in that a curved line approximating unit 254 is further provided.

The curved line approximating unit 254 causes a trajectory indicating a change in the maximum parallax on a time axis to approximate a curved line. Specifically, the curved line approximating unit 254 defines a function indicating a change in a parallax on a time axis, for example, through the following Formula 2.
[Math 1]

$$D(t) = at^3 + bt^2 + ct + d$$

$$\ldots\text{Formula 2}$$

In Formula 2, t indicates a time, and a unit is, for example, milliseconds. D(t) is a function indicating a change in a parallax on a time axis. a, b, c, and d are real number coefficients. The curved line approximating unit 254 obtains coefficients of D(t) approximating a trajectory indicating a change in the maximum parallax on a time axis. The coefficients are obtained by solving a normal equation based on the least square technique. Further, D(t) is a cubic function of t, but as long as a function has a curved line as a trajectory, D(t) is not limited to a cubic function. For example, D(t) may be an $n^{th}$-order function (n is an integer greater than or equal to 2) or a trigonometric function other than a cubic function.

Here, a method of deriving a normal equation is described. Among the acquired maximum parallaxes, a maximum parallax acquired at a time $t_k$ (k is an integer greater than or equal to 1) is assumed to be $D_k$. In this case, a difference $e_k$ between a parallax obtained by substituting tk into Formula 2 and the acquired $D_k$ is obtained by the following Formula 3.

[Math 2]

$$e_k = D_k - D(t_k)$$

$$= D_k - \left(at_k^3 + bt_k^2 + ct_k + d\right)$$

…Formula 3

In the least square technique, an optimal coefficient group is obtained by minimizing a square sum E expressed by the following Formula 4.

[Math 3]

$$E = \sum_{k=1}^{K} e_k^2$$

…Formula 4

In Formula 4, K indicates a total of the number of acquired maximum parallaxes, and is an integer (for example, "4") larger than at least an order ("3" in Formula 2) of D(t). A value of a coefficient minimizing the square sum E is a value when partial differentiation of the square sum E by the coefficient is "0." Formula 5 represents partial differentiation of the square sum E by the coefficients (a, b, c, and d)

[Math 4]

$$\frac{\partial E}{\partial a} = 2e_1 \frac{\partial e_1}{\partial a} + 2e_2 \frac{\partial e_2}{\partial a} + \cdots + 2e_K \frac{\partial e_K}{\partial a}$$

$$\frac{\partial E}{\partial b} = 2e_1 \frac{\partial e_1}{\partial b} + 2e_2 \frac{\partial e_2}{\partial b} + \cdots + 2e_K \frac{\partial e_K}{\partial b}$$

$$\frac{\partial E}{\partial c} = 2e_1 \frac{\partial e_1}{\partial c} + 2e_2 \frac{\partial e_2}{\partial c} + \cdots + 2e_K \frac{\partial e_K}{\partial c}$$

$$\frac{\partial E}{\partial d} = 2e_1 \frac{\partial e_1}{\partial d} + 2e_2 \frac{\partial e_2}{\partial d} + \cdots + 2e_K \frac{\partial e_K}{\partial d}$$

…Formula 5

A coefficient group by which partial differentiation is 0 in Formula 5 is an optimal coefficient group. The following Formula 6 is derived from Formula 5.

[Math 5]

$$e_1 \frac{\partial e_1}{\partial a} + e_2 \frac{\partial e_2}{\partial a} + \cdots + e_K \frac{\partial e_K}{\partial a} = 0$$

$$e_1 \frac{\partial e_1}{\partial b} + e_2 \frac{\partial e_2}{\partial b} + \cdots + e_K \frac{\partial e_K}{\partial b} = 0$$

$$e_1 \frac{\partial e_1}{\partial c} + e_2 \frac{\partial e_2}{\partial c} + \cdots + e_K \frac{\partial e_K}{\partial c} = 0$$

$$e_1 \frac{\partial e_1}{\partial d} + e_2 \frac{\partial e_2}{\partial d} + \cdots + e_K \frac{\partial e_K}{\partial d} = 0$$

…Formula 6

Here, when partial differentiation is performed on D(t) defined by Formula 2 using the coefficients (a, b, c, and d), the following Formula 7 is derived.

[Math 6]

$$\frac{\partial e_k}{\partial a} = -t_k^3, \frac{\partial e_k}{\partial b} = -t_k^2, \frac{\partial e_k}{\partial c} = -t_k, \frac{\partial e_k}{\partial d} = -1$$

…Formula 7

The following Formula 8 is obtained by substituting Formula 7 into Formula 6.

[Math 7]

$$\sum_{k=1}^{K} e_k t_k^3 = 0, \sum_{k=1}^{K} e_k t_k^2 = 0, \sum_{k=1}^{K} e_k t_k = 0, \sum_{k=1}^{K} e_k = 0$$

…Formula 8

Then, the following Formula 9 is obtained by substituting Formula 3 into ek of Formula 8.

[Math 8]

$$\sum_{k=1}^{K} \{D_k - D(t_k)\} t_k^3 = 0$$

$$\sum_{k=1}^{K} \{D_k - D(t_k)\} t_k^2 = 0$$

$$\sum_{k=1}^{K} \{D_k - D(t_k)\} t_k = 0$$

…Formula 9

$$\sum_{k=1}^{K} \{D_k - D(t_k)\} = 0$$

Formula 9 can be expanded into the following Formula 910.

[Math 9]

$$\sum_{k=1}^{K}\left(at_k^3\right)t_k^3 + \sum_{k=1}^{K}\left(bt_k^2\right)t_k^3 + \sum_{k=1}^{K}\left(ct_k\right)t_k^3 + \sum_{k=1}^{K}dt_k^3 = \sum_{k=1}^{K}D_k t_k^3$$

$$\sum_{k=1}^{K}\left(at_k^3\right)t_k^2 + \sum_{k=1}^{K}\left(bt_k^2\right)t_k^2 + \sum_{k=1}^{K}\left(ct_k\right)t_k^2 + \sum_{k=1}^{K}dt_k^2 = \sum_{k=1}^{K}D_k t_k^2$$

$$\sum_{k=1}^{K}\left(at_k^3\right)t_k + \sum_{k=1}^{K}\left(bt_k^2\right)t_K + \sum_{k=1}^{K}\left(ct_k\right)t_k + \sum_{k=1}^{K}dt_k = \sum_{k=1}^{K}D_k t_k$$

$$\sum_{k=1}^{K}\left(at_k^3\right) + \sum_{k=1}^{K}\left(bt_k^2\right) + \sum_{k=1}^{K}\left(ct_k\right) + \sum_{k=1}^{K}d = \sum_{k=1}^{K}D_k$$

...Formula 10

Formula 10 is expressed as the following Formula 11 that is a normal equation using a matrix.
[Math 10]

$$\begin{pmatrix} \sum_{k=1}^{K}t_k^6 & \sum_{k=1}^{K}t_k^5 & \sum_{k=1}^{K}t_k^4 & \sum_{k=1}^{K}t_k^3 \\ \sum_{k=1}^{K}t_k^5 & \sum_{k=1}^{K}t_k^4 & \sum_{k=1}^{K}t_k^3 & \sum_{k=1}^{K}t_k^2 \\ \sum_{k=1}^{K}t_k^4 & \sum_{k=1}^{K}t_k^3 & \sum_{k=1}^{K}t_k^2 & \sum_{k=1}^{K}t_k \\ \sum_{k=1}^{K}t_k^3 & \sum_{k=1}^{K}t_k^2 & \sum_{k=1}^{K}t_k & K \end{pmatrix} \begin{pmatrix} a \\ b \\ c \\ d \end{pmatrix} = \begin{pmatrix} \sum_{k=1}^{K}D_k t_k^3 \\ \sum_{k=1}^{K}D_k t_k^2 \\ \sum_{k=1}^{K}D_k t_k \\ \sum_{k=1}^{K}D_k \end{pmatrix}$$

...Formula 11

For example, Formula 11 can be solved for the coefficients using a sweep-out technique (Gauss-Jordan elimination technique) or the like. As a result, the coefficients (a, b, c, and d) minimizing the square sum E are obtained.
The curved line approximating unit 254 derives the coefficient by substituting k pieces of maximum parallaxes $D_k$ and the time tk into Formula 11, and supplies the derived coefficients to the UI parallax calculating unit 255. The UI parallax calculating unit 255 calculates the maximum parallax $D(t_k)$ at the time tk using Formula 2 to which the coefficients are set. Then, the UI parallax calculating unit 255 calculates a parallax obtained by adding $\alpha$ to the maximum parallax as the UI parallax.
Here, since the moving picture parallax and the subtitle parallax do not necessarily change according to a certain rule, the curved line approximating unit 254 updates the coefficients of the function at intervals of certain periods of time. For example, the curved line approximating unit 254 calculates and updates the coefficients at intervals of 100 milliseconds.
Further, a period of time in which a plurality of maximum parallaxes are acquired, and the coefficients are calculated includes a period of time in which the calculated coefficients are applied. For example, the UI parallax generating unit 250 acquires maximum parallaxes $D_1$, $D_2$, $D_3$, and $D_4$ at times $t_{a+1}$, $t_{a+2}$, $t_{a+3}$, and $t_{a+4}$ (a is an integer) from the parallax buffer 230 in advance. Then, the UI parallax generating unit 250 calculates the UI parallax in a period of time from the time $t_2$ to the time $t_{a+3}$ using the coefficients calculated from the parallaxes. Further, the calculated coefficients can be applied in any period of time as long as the coefficients are calculated in that period of time (a period of time from the time $t_{a+1}$ to the time $t_{a+4}$). For example, the coefficients may be applied in the period of time from the time $t_{a+3}$ to the time $t_{a+4}$.

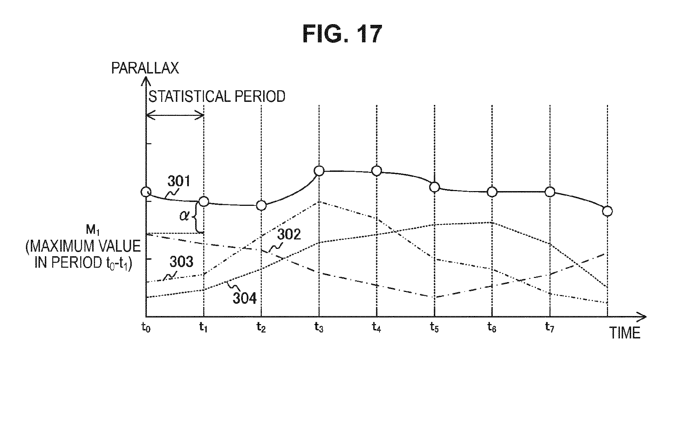

FIG. 17 is a diagram illustrating an exemplary change in the UI parallax according to the third embodiment. In FIG. 17, a horizontal axis denotes time, and a vertical axis denotes a parallax at a time. For example, the UI parallax generating unit 250 sets coefficients obtained based on 4 maximum parallaxes at times $t_1$, $t_2$ $t_3$, and $t_4$ to Formula 2, and calculates the UI parallax in a period of time from the time $t_2$ to the time $t_3$ using Formula 2. Through the same process, the UI parallax in the period of time from the time $t_3$ to the time $t_4$ is calculated using Formula 2 to which coefficients obtained based on 4 maximum parallaxes at times $t_2$, $t_3$, $t_4$, and $t_5$ are set. By approximating to the function defined by Formula 2, the image processing apparatus 200 can update the UI parallax as if a curved line is drawn by a trajectory

As described above, according to the third embodiment, the image processing apparatus 200 can cause a trajectory of a change in the maximum parallax on a time axis to approximate a curved line so that the UI parallax is changed smoothly. As a result, since the display position of the UI picture is changed smoothly in the depth direction, it is comfortable to view the UI picture, and operability of the device is improved.

The above-described embodiments are examples for embodying the present technology, and matters in the embodiments each have a corresponding relationship with invention-specific matters in the claims. Likewise, the matters in the embodiments and the invention-specific matters in the claims denoted by the same names have a corresponding relationship with each other. However, the present technology is not limited to the embodiments, and various modifications of the embodiments may be embodied in the scope of the present technology without departing from the spirit of the present technology.

The processing sequences that are described in the embodiments described above may be handled as a method having a series of sequences or may be handled as a program for causing a computer to execute the series of sequences and recording medium storing the program. As the recording medium, a hard disk, a CD (Compact Disc), an MD (MiniDisc), and a DVD (Digital Versatile Disk), a memory card, and a Blu-ray disc (registered trademark) can be used.

Additionally, the present technology may also be configured as below.

(1) An image processing apparatus including:

a parallax acquiring unit configured to acquire a parallax of each of a plurality of stereoscopic pictures in a moving picture including the plurality of stereoscopic pictures chronologically as a moving picture parallax; and
a parallax generating unit configured to generate a parallax causing a position in front of all of the plurality of stereoscopic pictures corresponding to the moving picture parallax acquired in a certain period of time to be a display position of a user interface picture as a user interface parallax.

(2) The image processing apparatus according to (1),
wherein the parallax acquiring unit further acquires parallaxes of a plurality of stereoscopic subtitle pictures to be combined with the plurality of stereoscopic pictures as a subtitle parallax, and
wherein the parallax generating unit generates a parallax causing a position in front both the plurality of stereoscopic pictures corresponding to the moving picture parallax acquired in the certain period of time and the plurality of stereoscopic subtitle pictures corresponding to the subtitle parallax to be the display position of the user interface picture as the user interface parallax.

(3) The image processing apparatus according to (1) or (2),
wherein the parallax generating unit generates a parallax causing a position in front of a picture at a forefront among the plurality of stereoscopic pictures acquired in the certain period of time by a certain distance to be the display position of the user interface picture as the user interface parallax.

(4) The image processing apparatus according to any one of (1) to (3), further including:

a parallax correcting unit configured to correct the moving picture parallax to have a value causing a position behind the user interface picture to be the display position when the moving picture parallax causing a position in front of the user interface picture to be a display position of the stereoscopic picture is acquired.

(5) The image processing apparatus according to any one of (1) to (4),
wherein the parallax generating unit includes
a maximum parallax selecting unit configured to select a parallax of a picture to be displayed at a forefront among display positions of the plurality of stereoscopic pictures and stereoscopic subtitle pictures acquired in the certain period of time at a plurality of certain periods of time as a maximum parallax,
a curved line approximating unit configured to obtain a curved line approximating a trajectory of a change in the maximum parallax on a time axis, and
a user interface parallax generating unit configured to generate a parallax causing a position in front of a display position according to the approximate parallax to be the display position of the user interface picture as the user interface parallax based on a change in approximate parallax on a time axis indicated by the curved line.
(6) The image processing apparatus according to any one of (1) to (5), further including:

a picture combining unit configured to combine the user interface picture having a position according the user interface parallax as a display position with each of the plurality of stereoscopic pictures.

(7) An information processing system including:

a parallax acquiring unit configured to acquire a parallax of each of a plurality of stereoscopic pictures in a moving picture including the plurality of stereoscopic pictures chronologically as a moving picture parallax;
a parallax generating unit configured to generate a parallax causing a position in front of all of the plurality of stereoscopic pictures corresponding to the moving picture parallax acquired in a certain period of time to be a display position of a user interface picture as a user interface parallax; and
a display unit configured to display the plurality of stereoscopic pictures combined with the user interface picture having a position according to the user interface parallax as a display position.

(8) An image processing method including:

a parallax acquisition process of acquiring, by a parallax acquiring unit, a parallax of each of a plurality of stereoscopic pictures in a moving picture including the plurality of stereoscopic pictures chronologically as a moving picture parallax; and
a parallax generation process of generating, by a parallax generating unit, a parallax causing a position in front of all of the plurality of stereoscopic pictures corresponding to the moving picture parallax acquired in a certain period of time to be a display position of a user interface picture as a user interface parallax.

(9) A program for causing a computer to execute:

a parallax acquisition process of acquiring, by a parallax acquiring unit, a parallax of each of a plurality of stereoscopic pictures in a moving picture including the plurality of stereoscopic pictures chronologically as a moving picture parallax; and
a parallax generation process of generating, by a parallax generating unit, a parallax causing a position in front of all of the plurality of stereoscopic pictures corresponding to the moving picture parallax acquired in a certain period of time to be a display position of a user interface picture as a user interface parallax.

Reference Signs List

| 100 | receiving device |
| 200 | image processing apparatus |
| 210 | parallax acquiring unit |
| 215 | parallax correcting unit |
| 220 | decoding unit |
| 230 | parallax buffer |
| 240 | synchronization control unit |
| 250 | UI parallax generating unit |
| 251 | statistical period measuring unit |
| 252 | maximum parallax updating unit |
| 253 | maximum parallax storage unit |
| 254 | curved line approximating unit |
| 255 | UI parallax calculating unit |
| 260 | UI picture generating unit |
| 270 | stereoscopic UI picture generating unit |
| 280 | stereoscopic subtitle picture generating unit |
| 285 | stereoscopic subtitle picture combining unit |
| 290 | stereoscopic UI picture combining unit |
| 300 | display device |

400    remote control device

**Claims**

**1.** An image processing apparatus comprising:

a parallax acquiring unit configured to acquire a parallax of each of a plurality of stereoscopic pictures in a moving picture including the plurality of stereoscopic pictures chronologically as a moving picture parallax; and a parallax generating unit configured to generate a parallax causing a position in front of all of the plurality of stereoscopic pictures corresponding to the moving picture parallax acquired in a certain period of time to be a display position of a user interface picture as a user interface parallax.

**2.** The image processing apparatus according to claim 1,
wherein the parallax acquiring unit further acquires parallaxes of a plurality of stereoscopic subtitle pictures to be combined with the plurality of stereoscopic pictures as a subtitle parallax, and
wherein the parallax generating unit generates a parallax causing a position in front both the plurality of stereoscopic pictures corresponding to the moving picture parallax acquired in the certain period of time and the plurality of stereoscopic subtitle pictures corresponding to the subtitle parallax to be the display position of the user interface picture as the user interface parallax.

**3.** The image processing apparatus according to claim 1,
wherein the parallax generating unit generates a parallax causing a position in front of a picture at a forefront among the plurality of stereoscopic pictures acquired in the certain period of time by a certain distance to be the display position of the user interface picture as the user interface parallax.

**4.** The image processing apparatus according to claim 1, further comprising:

a parallax correcting unit configured to correct the moving picture parallax to have a value causing a position behind the user interface picture to be the display position when the moving picture parallax causing a position in front of the user interface picture to be a display position of the stereoscopic picture is acquired.

**5.** The image processing apparatus according to claim 1,
wherein the parallax generating unit includes
a maximum parallax selecting unit configured to select a parallax of a picture to be displayed at a forefront among display positions of the plurality of stereoscopic pictures and stereoscopic subtitle pictures acquired in the certain period of time at a plurality of certain periods of time as a maximum parallax,
a curved line approximating unit configured to obtain a curved line approximating a trajectory of a change in the maximum parallax on a time axis, and
a user interface parallax generating unit configured to generate a parallax causing a position in front of a display position according to the approximate parallax to be the display position of the user interface picture as the user interface parallax based on a change in approximate parallax on a time axis indicated by the curved line.

**6.** The image processing apparatus according to claim 1, further comprising:

a picture combining unit configured to combine the user interface picture having a position according the user interface parallax as a display position with each of the plurality of stereoscopic pictures.

**7.** An information processing system comprising:

a parallax acquiring unit configured to acquire a parallax of each of a plurality of stereoscopic pictures in a moving picture including the plurality of stereoscopic pictures chronologically as a moving picture parallax;
a parallax generating unit configured to generate a parallax causing a position in front of all of the plurality of stereoscopic pictures corresponding to the moving picture parallax acquired in a certain period of time to be a display position of a user interface picture as a user interface parallax; and
a display unit configured to display the plurality of stereoscopic pictures combined with the user interface picture having a position according to the user interface parallax as a display position.

8. An image processing method comprising:

a parallax acquisition process of acquiring, by a parallax acquiring unit, a parallax of each of a plurality of stereoscopic pictures in a moving picture including the plurality of stereoscopic pictures chronologically as a moving picture parallax; and
a parallax generation process of generating, by a parallax generating unit, a parallax causing a position in front of all of the plurality of stereoscopic pictures corresponding to the moving picture parallax acquired in a certain period of time to be a display position of a user interface picture as a user interface parallax.

9. A program for causing a computer to execute:

a parallax acquisition process of acquiring, by a parallax acquiring unit, a parallax of each of a plurality of stereoscopic pictures in a moving picture including the plurality of stereoscopic pictures chronologically as a moving picture parallax; and
a parallax generation process of generating, by a parallax generating unit, a parallax causing a position in front of all of the plurality of stereoscopic pictures corresponding to the moving picture parallax acquired in a certain period of time to be a display position of a user interface picture as a user interface parallax.

# FIG. 1

RECEIVING DEVICE — 100

MOVING PICTURE STREAM AND SUBTITLE STREAM — 109

IMAGE PROCESSING APPARATUS — 200

OPERATION SIGNAL

REMOTE CONTROL DEVICE — 400

209

DISPLAY DEVICE — 300

## FIG. 2

(100)
109

MOVING
PICTURE
STREAM

SUBTITLE
STREAM

(400)

OPERATION SIGNAL

200

IMAGE PROCESSING APPARATUS

250

UI PARALLAX
GENERATING
UNIT

260

UI PICTURE
GENERATING
UNIT

259

UI PARALLAX

269

UI
PICTURE

210

PARALLAX
ACQUIRING
UNIT

230

PARALLAX
BUFFER

270

STEREOSCOPIC
UI PICTURE
GENERATING
UNIT

STEREOSCOPIC
UI PICTURE

239

240

SYNCHRONIZATION
CONTROL UNIT

PARALLAX AND
SUBTITLE DATA

280

STEREOSCOPIC
SUBTITLE
PICTURE
GENERATING
UNIT

STEREOSCOPIC
SUBTITLE
PICTURE

220

DECODING
UNIT

PTS

MOVING PICTURE
STREAM

285

STEREOSCOPIC
SUBTITLE
PICTURE
COMBINING
UNIT

290

STEREOSCOPIC
UI PICTURE
COMBINING
UNIT

209

(300)

# FIG. 3

250

**UI PARALLAX GENERATING UNIT**

251
STATISTICAL PERIOD MEASURING UNIT

TIMER VALUE

PARALLAX (230)

239

252
MAXIMUM PARALLAX UPDATING UNIT

253
MAXIMUM PARALLAX STORAGE UNIT

MAXIMUM PARALLAX

255
UI PARALLAX CALCULATING UNIT

UI PARALLAX

259

(270)

# FIG. 4

610
GOP

| PICTURE | B1 | B2 | I3 | B4 | B5 | P6 | B7 | B8 | P9 | B10 | B11 | P12 | B13 | B14 | P15 |
|---|---|---|---|---|---|---|---|---|---|---|---|---|---|---|---|

611

a

| | | | | | | | | | | | | | | | |
|---|---|---|---|---|---|---|---|---|---|---|---|---|---|---|---|
| (PTS) | 3 | 1 | 2 | 6 | 4 | 5 | 9 | 7 | 8 | 12 | 10 | 11 | 15 | 13 | 14 |
| (DTS) | 0 | – | – | 3 | – | – | 6 | – | – | 9 | – | – | 12 | – | – |
| PICTURE | I3 | B1 | B2 | P6 | B4 | B5 | P9 | B7 | B8 | P12 | B10 | B11 | P15 | B13 | B14 |

622
623
621

b

520   530          531

| ARI_PCK | V_PCK_I3 | ・・・ | V_PCK_I3 | V_PCK_B1 | ・・・ | V_PCK_B1 | | ・・・ | |
|---|---|---|---|---|---|---|---|---|---|

I3          B1

c

# FIG. 5

| PES PACKET #1 | | PES PACKET #2 | | ... |
|---|---|---|---|---|
| | | | | |
| HEADER (PTS) | PAYLOAD (SUBTITLE DATA) | HEADER (PTS) | PAYLOAD (PARALLAX) | |

# FIG. 6

| | |
|---|---|
| stream_id | "10111101" IS SET |
| PES_packet_length | VALUE SPECIFYING LENGTH OF PES PACKET IS SET |
| data_alignment_indicator | "1" INDICATING THAT subtitle segments ARE ARRANGED IN PES PACKET IS SET |
| Presentation_Time_Stamp of subtitle | INDICATE DISPLAY START TIME OF PICTURE GROUP TRANSFERRED VIA PES PACKET TOGETHER WITH PTS |
| PES_packet_data_byte | PES_data_field IS STORED |

| Syntax | Size |
|---|---|
| PES_data_field() { | |
|     data_identifier | 8 |
|     subtitle_stream_id | 8 |
|     while nextbits() == '0000 1111' { | |
|         Subtitling_segment() | |
|     } | |
|     end_of_PES_data_field_marker | 8 |
| } | |

| Syntax | Size |
|---|---|
| Subtitling_segment() { | |
|     sync_byte | 8 |
|     segment_type | 8 |
|     page_id | 16 |
|     segment_length | 16 |
|     segment_data_field() | |
| } | |

# FIG. 7

| ITEM | DATA |
|---|---|
| Subtitling_segment() { | |
| sync_byte | ... |
| segment_type | 0x13 |
| page_id | ... |
| segment_length | ... |
| segment_data_field() | SUBTITLE DATA |
| } | |

<u>a</u>

| ITEM | DATA |
|---|---|
| Subtitling_segment() { | |
| sync_byte | ... |
| segment_type | 0x15 |
| page_id | ... |
| segment_length | ... |
| segment_data_field() | PARALLAX |
| } | |

<u>b</u>

# FIG. 8

230

| PTS<br>(Presentation Time Stamp) | PARALLAX<br>(-128~127) | |
|---|---|---|
| | MOVING PICTURE<br>PARALLAX | SUBTITLE PARALLAX |
| PTS#1 | 20 | 10 |
| PTS#2 | 1 | 0 |
| PTS#3 | -10 | -20 |
| . . . | . . . | . . . |

# FIG. 9

START

S901
ACQUIRE PTS AND PARALLAX

S902
UPDATE MAXIMUM PARALLAX

S903
GENERATE STEREOSCOPIC SUBTITLE PICTURE AND STEREOSCOPIC UI PICTURE

S904
COMBINE STEREOSCOPIC SUBTITLE PICTURE WITH STEREOSCOPIC UI PICTURE

S905
HAS STATISTICAL PERIOD ELAPSED?

No

Yes

S906
DECIDE MAXIMUM PARALLAX IN STATISTICAL PERIOD

907
GENERATE UI PARALLAX (MAXIMUM PARALLAX + α)

S908
GENERATE UI PICTURE

# FIG. 10

# FIG. 11

701    702    300

801

a

701,702,801    300

b

801

702    701    300

c

# FIG. 12

PARALLAX

STATISTICAL PERIOD

301

$\alpha$

302

$M_1$
(MAXIMUM VALUE
IN PERIOD $t_0$-$t_1$)

303

304

$t_0$   $t_1$   $t_2$   $t_3$   $t_4$   $t_5$   $t_6$   $t_7$   TIME

# FIG. 13

705        703              704      706
UI      SUBTITLE         SUBTITLE    UI
PICTURE  PICTURE          PICTURE   PICTURE
(L)      (L)              (R)       (R)

802
SUBTITLE
PICTURE

803
UI
PICTURE

# FIG. 14

# FIG. 15

a

b

# FIG. 16

250

UI PARALLAX GENERATING UNIT

251

STATISTICAL
PERIOD
MEASURING
UNIT

TIMER VALUE

252

PARALLAX
(230)

239

MAXIMUM
PARALLAX
UPDATING
UNIT

253

MAXIMUM
PARALLAX
STORAGE
UNIT

MAXIMUM
PARALLAX

254

CURVED LINE
APPROXIMATING
UNIT

COEFFICIENTS

255

UI PARALLAX
CALCULATING
UNIT

UI PARALLAX

259

(270)

## FIG. 17

## INTERNATIONAL SEARCH REPORT

| International application No. |
|---|
| PCT/JP2013/058976 |

### A. CLASSIFICATION OF SUBJECT MATTER
*H04N13/04*(2006.01)i, *G06F3/048*(2013.01)i

According to International Patent Classification (IPC) or to both national classification and IPC

### B. FIELDS SEARCHED

Minimum documentation searched (classification system followed by classification symbols)
H04N13/04, G06F3/048

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2011-239169 A (Sony Corp.),<br>24 November 2011 (24.11.2011),<br>paragraphs [0075], [0124], [0157], [0170] to<br>[0172]; fig. 20, 23, 27<br>& US 2011/0273532 A1 & EP 2387246 A2<br>& CN 102244795 A | 1-3,6-9<br>4,5 |
| Y<br>A | WO 2010/032399 A1 (Panasonic Corp.),<br>25 March 2010 (25.03.2010),<br>paragraphs [0008], [0009], [0327], [0329]<br>& US 2010/0074594 A1 & EP 2326101 A1<br>& CN 102150433 A & MX 2011002553 A | 1-3,6-9<br>4,5 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 April, 2013 (25.04.13) | 14 May, 2013 (14.05.13) |

| Name and mailing address of the ISA/<br>Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012004654 A